# EUROPÄISCHE PATENTSCHRIFT

(11) **EP 3 835 119 B1**
(45) Veröffentlichungstag und Bekanntmachung des Hinweises auf die Patenterteilung: **17.09.2025**
(21) Anmeldenummer: 20208162.6
(22) Anmeldetag: 17.11.2020
(51) Int. Cl.: B60N 2/06, B60N 2/14, B60N 2/02

(54) **SITZANORDNUNG, FAHRZEUG MIT MINDESTENS EINER SITZANORDNUNG UND VERFAHREN ZUR STEUERUNG EINER SITZANORDNUNG**
SEAT ASSEMBLY, VEHICLE WITH AT LEAST ONE SEAT ASSEMBLY AND METHOD OF CONTROLLING A SEAT ASSEMBLY
SYSTÈME DE SIÈGE, VÉHICULE DOTÉ D'AU MOINS UN SYSTÈME DE SIÈGE ET PROCÉDÉ DE COMMANDE D'UN SYSTÈME DE SIÈGE

(30) Priorität: 13.12.2019 DE 102019134374
(43) Veröffentlichungstag der Anmeldung: 16.06.2021
(73) Patentinhaber: ALSTOM Holdings, 93400 Saint-Ouen-sur-Seine (FR)
(72) Erfinder: Rücker, Felix, 01067 Dresden (DE)
(74) Vertreter: Zimmermann & Partner Patentanwälte mbB

(56) Entgegenhaltungen:
- DE-A1- 102013 227 013
- DE-A1- 102015 212 459
- DE-A1- 102016 123 240
- DE-B4- 102016 123 240
- JP-A- 2001 246 967
- US-A1- 2006 255 640
- US-A1- 2008 290 706
- US-B1- 7 422 264

## Beschreibung

Die Erfindung betrifft eine Sitzanordnung, ein Fahrzeug mit mindestens einer Sitzanordnung und ein Verfahren zur Steuerung einer Sitzanordnung.

Es ist bekannt, dass Fahrzeugsitze für Personal, z.B. auch Fahrersitze, mehrere Bewegungen ausführen können. Diese Bewegungen umfassen eine Aufwärts- und eine Abwärtsbewegung, eine Vorwärts- und Rückwärtsbewegung sowie eine Rotationsbewegung um eine Längsachse des Fahrzeugsitzes. All diese Bewegungen sind voneinander unabhängig, und der Fahrersitz kann in jeder Position uneingeschränkt gedreht werden, wobei es keine Rolle spielt, ob sich der Sitz in einer vorderen, hinteren, oberen oder unteren Position befindet. Die Unabhängigkeit der Bewegungen voneinander führt dazu, dass z.B. ein Fahrersitz, der sich in einer vordersten Position befindet, bei einer Rotation z.B. gegen ein Fahrerpult stößt, z.B. mit einer Armlehne oder einer Rückenlehne.

Die CN 105774832 A beschreibt einen elektrischen Rotationsantrieb für einen Sitz in einem Hochgeschwindigkeitszug. Der Rotationsantrieb bewirkt eine automatische Drehung des Sitzes mit Hilfe einer Fernbedienung. Nachteilig ist hierbei, dass der Sitz ebenfalls z.B. mit einer Armlehne oder einer Rückenlehne an einen anderen Gegenstand im Hochgeschwindigkeitszug anstoßen kann. Außerdem ist lediglich eine rotatorische Bewegung des Sitzes beschrieben.

Die EP 3 398 806 A1 offenbart eine Vorrichtung zum Rotieren eines Sitzes in einem Schienenfahrzeug, mit der ein Sitz entsprechend einer Fahrtrichtung ausgerichtet werden kann. Der Sitz ist um 180° drehbar. Die Vorrichtung umfasst Mittel zum Verriegeln und Entriegeln des Sitzes in einer ersten und in einer zweiten rotatorischen Endposition. Eine Steuerung des Sitzes erfolgt mit pneumatischen Mitteln. Ein Nachteil besteht darin, dass der Sitz nur in einer rotatorischen Richtung bewegt werden kann.

Die US 2006/255640 A1 beschreibt einen Fahrzeugsitz auf einer stationären Grundplatte welche einen ersten Verschiebungsmechanismus, einen Drehmechanismus und einen zweiten Verschiebungsmechanismus 40 trägt. Damit kann der Fahrzeugsitz zunächst in einer Längsrichtung verschoben, dann gedreht und danach senkrecht zur Längsrichtung aus dem Fahrzeug geschoben werden. Dies soll Passagieren einen einfacheren Zugang zum Fahrzeug ermöglichen.

Die DE 10 2015 212 459 A1 beschreibt einen Sitz für eine Baumaschine, mit einer Sitzkonsole, einer Vorrichtung zum seitlichen Verschieben des Sitzes in Querrichtung zur Fahrtrichtung der Baumaschine, und einer Sitzdrehvorrichtung und einer Anschlagbegrenzungseinrichtung, welche den maximal zulässigen Drehwinkel des Sitzes jeweils in Abhängigkeit der eingestellten Position der seitlichen Verschiebung des Sitzes unterschiedlich begrenzt.

Der Erfindung liegt daher die Aufgabe zu Grunde, eine Sitzanordnung, ein Fahrzeug und ein Verfahren zu schaffen, wobei die Sitzanordnung in verschiedenen Richtungen bewegbar ist und wobei während einer Drehbewegung der Sitzanordnung ein Anstoßen an andere Gegenstände vermieden wird.

Diese Aufgabe wird erfindungsgemäß mit einer Sitzanordnung nach Anspruch 1 gelöst. Weiterhin wird die Aufgabe mit einem Fahrzeug nach Anspruch 12 und einem Verfahren nach Anspruch 13 gelöst. Vorteilhafte Ausgestaltungen der Erfindung sind in den Unteransprüchen enthalten.

Erfindungsgemäß besteht die Lösung der Aufgabe in einer Sitzanordnung zur Vermeidung einer Kollision mit einem weiteren Einrichtungsgegenstand in einer Umgebung der Sitzanordnung,
wobei
- der Einrichtungsgegenstand an der Umgebung befestigt ist, und wobei
- die Sitzanordnung einen an einem Fußboden der Umgebung befestigten Sitzfuß und
- eine auf dem Sitzfuß angeordnete Sitzeinheit, die um eine Drehachse drehbar ist, umfasst,
   wobei
- die Sitzanordnung auch in einer Längsrichtung verschiebbar ist,
- eine Drehung der Sitzeinheit um die Drehachse mit einer Verschiebung der Sitzeinheit in der Längsrichtung gekoppelt ist, wobei
- ein Drehwinkel der Sitzeinheit von der Verschiebung der Sitzeinheit in der Längsrichtung abhängig ist, und wobei
- ein erster Drehwinkel (α) der Sitzeinheit (12) 360° beträgt, wenn sich die Sitzeinheit (12) in einer ersten Position (P1) entlang der Längsrichtung (x) befindet, sodass eine freie Bewegung um die Drehachse gegeben ist, wodurch ein Aufstehen bzw. Hinsetzen bei jedem beliebigen Drehwinkel ermöglicht wird.

Ein Vorteil der erfindungsgemäßen Sitzanordnung besteht darin, dass die Sitzanordnung in verschiedenen Richtungen bewegbar ist, und dass während einer Drehbewegung der Sitzanordnung ein Anstoßen an andere Gegenstände vermieden wird. Weiterhin wird ein Einklemmen von Gegenständen, wie z.B. Kleidung, oder von Fingern vermieden. Wenn der Einrichtungsgegenstand z.B. ein Fahrerpult ist, können austauschbare Pultkanten entfallen und eine Herstellung des Fahrerpultes vereinfacht werden. Außerdem wird die Verschiebung der Sitzanordnung in der Längsrichtung mit der Drehung um die Drehachse verbunden, so dass diese voneinander abhängig sind. Die Drehbewegung wird in Abhängigkeit von einer Position der Sitzanordnung in der Längsrichtung eingeschränkt.

Der erste Drehwinkel α der Sitzeinheit beträgt 360°, wenn sich die Sitzeinheit in einer ersten Position entlang der Längsrichtung befindet. Die erste Position kann eine Endposition in der Längsrichtung sein, die in einer größtmöglichen Entfernung von dem Einrichtungsgegenstand liegt. In der ersten Position ist daher eine freie Bewegung um die Drehachse gegeben, wodurch ein Aufstehen bzw. Hinsetzen bei jedem beliebigen Drehwinkel möglich ist.

Der Drehwinkel der Sitzeinheit kann in Abhängigkeit von der Verschiebung der Sitzeinheit in der Längsrichtung begrenzt sein, wobei der Drehwinkel insbesondere in Bezug auf einen Anstoßwinkel verringert ist, beispielsweise um 2°. Der Drehwinkel kann in Bezug auf den Anstoßwinkel beispielsweise auch um 5° verringert sein. Der Anstoßwinkel ist ein Winkel, bei dem ein Anstoßen der Sitzeinheit an den Einrichtungsgegenstand stattfinden würde. Durch die Begrenzung kann ein Anstoßen z.B. einer Armlehne und/oder einer Rückenlehne der Sitzeinheit an den Einrichtungsgegenstand vermieden werden.

Insbesondere beträgt ein zweiter Drehwinkel der Sitzeinheit weniger als 50°, beispielsweise 48°, wenn sich die Sitzeinheit in einer zweiten Position entlang der Längsrichtung befindet. Die zweite Position ist z.B. eine mittlere Position in der Längsrichtung zwischen zwei Endpositionen. Eine Endposition entspricht der ersten Position, die am weitesten vom Einrichtungsgegenstand entfernt ist.

Außerdem kann ein dritter Drehwinkel der Sitzeinheit weniger als 10°, beispielsweise 8°, betragen, wenn sich die Sitzeinheit in einer dritten Position entlang der Längsrichtung befindet. Die dritte Position kann eine Endposition in der Längsrichtung sein, die in einer größtmöglichen Nähe an dem Einrichtungsgegenstand liegt. In der dritten Position ist daher eine Bewegungsmöglichkeit in der Drehrichtung am geringsten. Dadurch wird ein Anstoßen der Sitzeinheit an den Einrichtungsgegenstand vermieden.

Alternativ kann ein dritter Drehwinkel der Sitzeinheit 0° betragen, wenn sich die Sitzeinheit in einer dritten Position entlang der Längsrichtung befindet. In dieser Position ist also keine Drehbewegung möglich. Ein Nutzer der Sitzanordnung muss die Sitzeinheit entgegen der Längsrichtung verschieben, um die Sitzeinheit drehen zu können. Dadurch ist die Sitzeinheit in der dritten Position stabil in Bezug auf die Drehachse.

Vorzugsweise ist an der Sitzeinheit ein Bewegungselement angeordnet, das innerhalb eines an dem Sitzfuß angeordneten Begrenzungselements begrenzt verschiebbar ist. Eine Kombination aus einem Bewegungselement und einem Begrenzungselement stellt eine einfach aufgebaute Struktur dar, mit der die Abhängigkeit einer Bewegung der Sitzeinheit um die Drehachse von einer Bewegung in der Längsrichtung ermöglicht wird.

Speziell kann das Begrenzungselement eine stufenlose, zur Längsrichtung zumindest teilweise symmetrische und/oder zumindest teilweise asymmetrische Verjüngung von der ersten Position der Sitzeinheit bis hin zur dritten Position der Sitzeinheit aufweisen. Die Verjüngung bewirkt die Begrenzung der Drehbewegung der Sitzeinheit in Abhängigkeit von der Längsrichtung.

Zudem kann das Begrenzungselement an einem ersten abgerundet sein und/oder an einem zweiten Ende eine zum ersten Ende hin offene Trapezform aufweisen. Das erste Ende und das zweite Ende bilden jeweils eine Führung für eine Bewegung des Bewegungselements.

Weiterhin kann das Begrenzungselement dem Bewegungselement an dem zweiten Ende einen geringeren Drehwinkel ermöglichen als an dem ersten Ende. Dadurch ist gewährleistet, dass eine Drehbewegung in Abhängigkeit von der Längsrichtung veränderlich ist.

Alternativ kann das Begrenzungselement an dem zweiten Ende eine Drehung des Bewegungselements verhindern. Das Bewegungselement ist dann stabil in Bezug auf die Drehachse, wodurch auch die Lage der Sitzeinheit um die Drehachse stabil ist.

Zudem kann auch das Bewegungselement nockenförmig ausgebildet sein oder das Bewegungselement kann eine Kreisform mit einem Vorsprung aufweisen. Dadurch kann das Bewegungselement besonders gut in dem Begrenzungselement geführt werden.

Weiterhin wird die Aufgabe mit einem Fahrzeug mit mindestens einer Sitzanordnung gelöst, wobei das Fahrzeug die Umgebung der Sitzanordnung ausbildet. Ein Fahrzeug ist besonders für einen Einbau der Sitzanordnung geeignet, weil in dem Fahrzeug Sitze benötigt werden, die am Fußboden befestigt sind.

Außerdem wird die Aufgabe durch ein Verfahren zur Steuerung einer Sitzanordnung gelöst. Mindestens ein erster Sensor erfasst eine Position der Sitzeinheit entlang der Längsrichtung, ein zugehöriger Drehwinkel wird errechnet und eine Drehung der Sitzeinheit wird mittels einer Steuerung begrenzt. Auf diese Weise kann eine Steuerung der Sitzeinheit automatisiert durchgeführt werden.

In einer speziellen Ausgestaltung der Erfindung erfasst mindestens ein zweiter Sensor eine Position, eine Geometrie, eine Veränderung der Position und/oder eine Veränderung der Geometrie des Einrichtungsgegenstands, und der Drehwinkel der Sitzeinheit wird an die Position, die Geometrie, die Veränderung der Position und/oder die Veränderung der Geometrie des Einrichtungsgegenstands angepasst. Somit können nicht nur die ursprüngliche Position und Geometrie des Einrichtungsgegenstands, sondern auch Veränderungen am Einrichtungsgegenstand berücksichtigt werden, z.B. wenn die Position des Einrichtungsgegenstands gegenüber der Sitzeinheit verändert wird oder wenn ein Gegenstand, beispielsweise ein Getränkehalter, am Einrichtungsgegenstand angebracht wird.

Im Folgenden werden zwei Ausführungsbeispiele der Erfindung anhand von dreizehn Figuren näher erläutert. Es zeigen:
- Fig. 1: eine schematische Schnittansicht einer erfindungsgemäßen Sitzanordnung,
- Fig. 2: eine schematische, perspektivische Darstellung eines Begrenzungselements und eines Bewegungselements der erfindungsgemäßen Sitzanordnung in Fig. 1 gemäß einem ersten Ausführungsbeispiel,
- Fig. 2A bis 2E: verschiedene schematische Positionen und Drehwinkel des Bewegungselements in Fig. 2,
- Fig. 3: eine schematische, perspektivische Darstellung eines Begrenzungselements und eines Bewegungselements der erfindungsgemäßen Sitzanordnung in Fig. 1 gemäß einem zweiten Ausführungsbeispiel und
- Fig. 3A bis 3E: verschiedene schematische Positionen und Drehwinkel des Bewegungselements in Fig. 3.

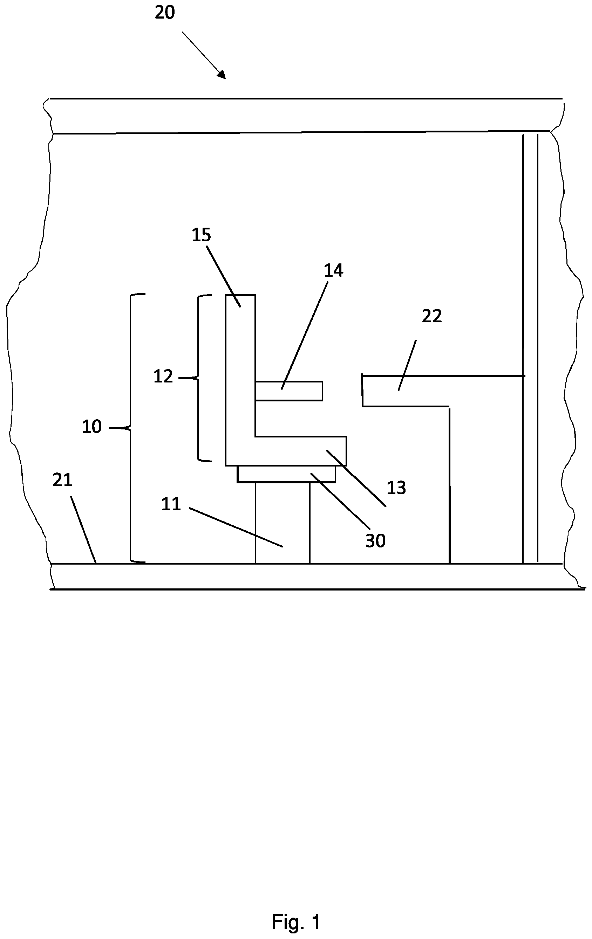

Fig. 1 zeigt eine erfindungsgemäße Sitzanordnung 10 in einer Umgebung 20, die hier einem Fahrzeug bzw. einem Schienenfahrzeug entspricht. Eine Sitzanordnung 10 kann sich beispielsweise in einem Zugbegleiterabteil und/oder in einem Zugführerraum eines Schienenfahrzeugs befinden. Weitere Einsatzmöglichkeiten, auch in anderen Arten von Fahrzeugen, wie z.B. in LKW oder Bussen, in Schiffen, Flugzeugen und sogar in der Luft- und Raumfahrt sind denkbar. Die Sitzanordnung 10 kann sich dann in einem Cockpit befinden. Außerdem ist ein Einsatz der Sitzeinrichtung in Baumaschinen oder Gebäuden, z.B. in Laboren oder Kontrollräumen möglich. Die Umgebung 20 umfasst zusätzlich zur Sitzanordnung 10 einen Fußboden 21 und einen Einrichtungsgegenstand 22, der beispielsweise ein Tisch sein kann. Als Einrichtungsgegenstand 22 ist auch ein Fahrerpult des Fahrzeugs denkbar.

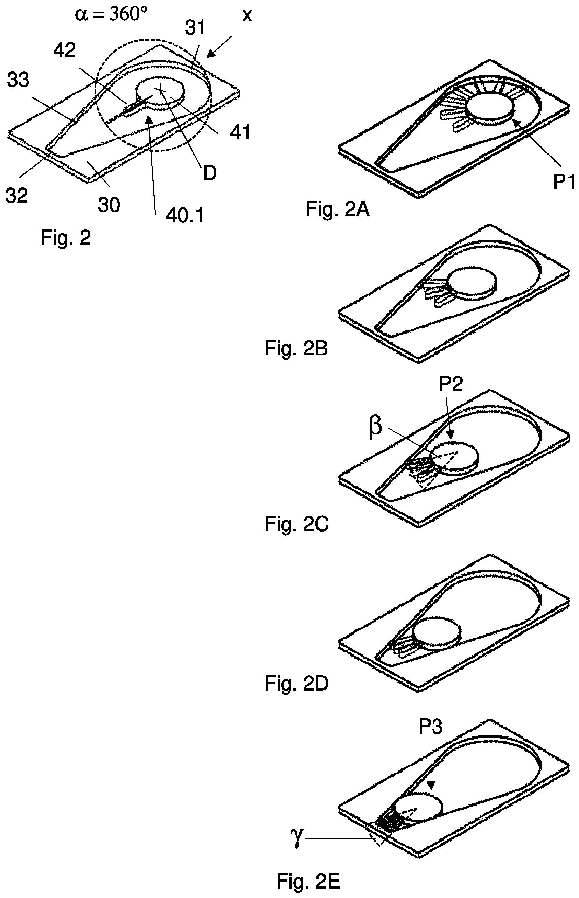

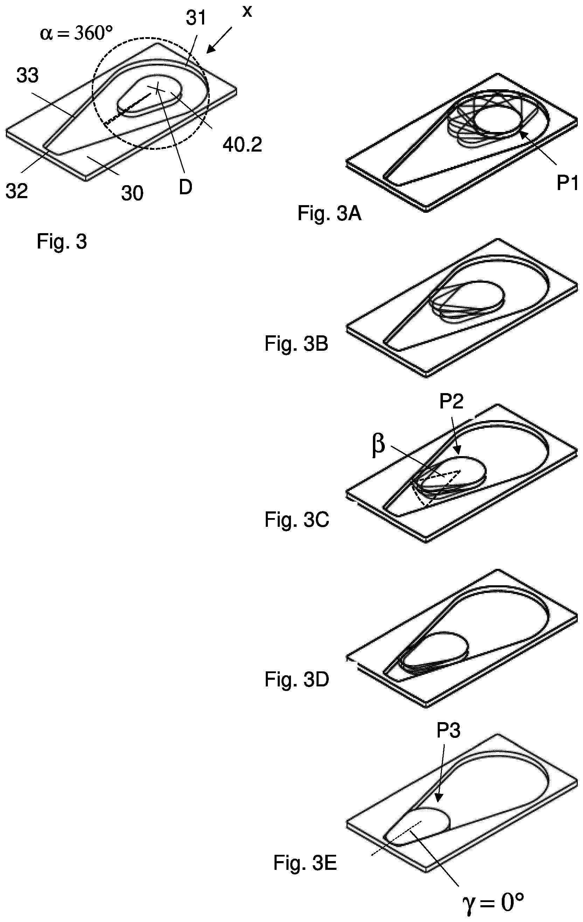

Die Sitzanordnung 10 umfasst einen Sitzfuß 11, eine Sitzeinheit 12 und ein Begrenzungselement 30, in dem ein Bewegungselement 40.1, 40.2 angeordnet ist, vgl. Fig. 2 bis 2E und 3 bis 3E. Die Sitzeinheit 12 umfasst eine Sitzfläche 13, eine Armlehne 14 und eine Rückenlehne 15. Eine Längsrichtung x definiert eine Bewegungsrichtung des Bewegungselements 40.1 bzw. 40.2.

In den Fig. 2 bis 2E und 3 bis 3E sind das Begrenzungselement 30 und das Bewegungselement 40.1 bzw. 40.2 gemeinsam, aber ansonsten von der Sitzanordnung 10 isoliert, dargestellt. Die Bezugszeichen in Fig. 2 gelten für die Fig. 2A bis 2E gleichermaßen. Die Bezugszeichen in Fig. 3 gelten für die Fig. 3A bis 3E gleichermaßen.

In den Fig. 2 und 3 weist das Begrenzungselement 30 in der Längsrichtung x ein erstes Ende 31 und ein zweites Ende 32 auf. Außerdem umfasst das Begrenzungselement 30 eine Verjüngung 33 in der Längsrichtung.

Das Bewegungselement 40.1 bzw. 40.2 weist eine Drehachse D auf. In Fig. 2 umfasst das Bewegungselement 40.1 eine Kreisform 41 mit einem Vorsprung 42. In Fig. 3 ist das Bewegungselement 40.2 nockenförmig.

In den Fig. 2 und 2A sowie 3 und 3A befindet sich das Bewegungselement 40.1 bzw. 40.2 in einer ersten Position P1 und ist um einen ersten Drehwinkel α = 360° drehbar.

Die Fig. 2B und 3B zeigen eine Zwischenposition des Bewegungselement 40.1 bzw. 40.2 zwischen der ersten Position P1 und einer zweiten Position P2. In der Zwischenposition ist das Bewegungselement 40.1 bzw. 40.2 nur noch begrenzt drehbar. Weitere Zwischenpositionen sind möglich, da das Bewegungselement 40.1 bzw. 40.2 stufenlos bewegbar ist.

In den Fig. 2C und 3C befindet sich das Bewegungselement 40.1 bzw. 40.2 in der zweiten Position P2, die eine mittlere Position zwischen dem ersten Ende 31 und dem zweiten Ende 32 ist. Hier ist das Bewegungselement 40.1 bzw. 40.2 begrenzt um den zweiten Drehwinkel β drehbar, der beispielsweise kleiner als 50° ist.

Die Fig. 2D und 3D zeigen eine Zwischenposition des Bewegungselement 40.1 bzw. 40.2 zwischen der zweiten Position P2 und einer dritten Position P3. In der Zwischenposition ist das Bewegungselement 40.1 bzw. 40.2 weniger drehbar als in der zweiten Position P2. Weitere Zwischenpositionen sind möglich, da das Bewegungselement 40.1 bzw. 40.2 stufenlos bewegbar ist.

In Fig. 2E ist das Bewegungselement 40.1 nur noch um einen dritten Drehwinkel γ drehbar, der kleiner ist als der zweite Drehwinkel β und der beispielsweise 10° beträgt.

In Fig. 3E ist das Bewegungselement 40.2 nicht mehr drehbar, d.h. der dritte Drehwinkel γ beträgt 0°.

Das Bewegungselement 40.1 bzw. 40.2 ist in der Reihenfolge der Fig. 2A bis 2E bzw. 3A bis 3E in der Längsrichtung x bewegbar. Selbstverständlich ist das Bewegungselement 40.1 bzw. 40.2 auch entgegen der Längsrichtung x bewegbar.

Im Betrieb wird die Sitzeinheit 12, die am Bewegungselement 40.1 bzw. 40.2 befestigt ist, relativ zum Begrenzungselement 30, das am Sitzfuß 11 befestigt ist, bewegt. Der erste Drehwinkel α, der zweite Drehwinkel β und der dritte Drehwinkel γ hängen dabei von der Position P1, P2, P3 des Bewegungselements 40.1 bzw. 40.2 in der Längsrichtung x ab. Dadurch ist der dritte Drehwinkel γ in der dritten Position P3 am Einrichtungsgegenstand 22 kleiner als der zweite Drehwinkel β in der zweiten Position P2, die vom Einrichtungsgegenstand 22 beabstandet ist. Der zweite Drehwinkel β wiederum ist kleiner als der erste Drehwinkel α in der ersten Position P1, die vom Einrichtungsgegenstand 22 weiter beabstandet ist als die zweite Position P2. Dadurch wird ein Anstoßen der Sitzeinheit 12 an den Einrichtungsgegenstand 22 vermieden.

Die Kombination aus einem Begrenzungselement 30 und einem Bewegungselement 40.1 bzw. 40.2 ist auch in der Produktionstechnik und/oder bei einer Automatisierung von Abläufen möglich, bei denen Gegenstände oder Maschinen nicht gegen andere Gegenstände oder Maschinen stoßen dürfen.

### Bezugszeichenliste

- 10: Sitzanordnung
- 11: Sitzfuß
- 12: Sitzeinheit
- 13: Sitzfläche
- 14: Armlehne
- 15: Rückenlehne
- 20: Umgebung
- 21: Fußboden
- 22: Einrichtungsgegenstand
- 30: Begrenzungselement
- 31: Erstes Ende
- 32: Zweites Ende
- 33: Verjüngung
- 40.1: Bewegungselement
- 40.2: Bewegungselement
- 41: Kreisform
- 42: Vorsprung

- x: Längsrichtung
- P1: Erste Position
- P2: Zweite Position
- P3: Dritte Position
- D: Drehachse
- α: Erster Drehwinkel
- β: Zweiter Drehwinkel
- γ: Dritter Drehwinkel

## Patentansprüche

1. Sitzanordnung (10) zur Vermeidung einer Kollision mit einem weiteren Einrichtungsgegenstand (22) in einer Umgebung (20) der Sitzanordnung (10), wobei
- der Einrichtungsgegenstand (22) an der Umgebung (20) befestigt ist, und wobei
- die Sitzanordnung (10) einen an einem Fußboden (21) der Umgebung (20) befestigten Sitzfuß (11),
- eine auf dem Sitzfuß (11) angeordnete Sitzeinheit (12), die um eine Drehachse (D) drehbar ist, umfasst,
**dadurch gekennzeichnet, dass**
- die Sitzanordnung (10) auch in einer Längsrichtung (x) verschiebbar ist,
- eine Drehung der Sitzeinheit (12) um die Drehsachse (D) mit einer Verschiebung der Sitzeinheit (12) in der Längsrichtung (x) gekoppelt ist, wobei
- ein Drehwinkel (α, β, γ) der Sitzeinheit (12) von der Verschiebung der Sitzeinheit (12) in der Längsrichtung (x) abhängig ist, und wobei
- ein erster Drehwinkel (α) der Sitzeinheit (12) 360° beträgt, wenn sich die Sitzeinheit (12) in einer ersten Position (P1) entlang der Längsrichtung (x) befindet, sodass eine freie Bewegung um die Drehachse gegeben ist, wodurch ein Aufstehen bzw. Hinsetzen bei jedem beliebigen Drehwinkel ermöglicht wird.

2. Sitzanordnung (10) nach Anspruch 1, **dadurch gekennzeichnet, dass** der Drehwinkel (β, y) der Sitzeinheit (12) in Abhängigkeit von der Verschiebung der Sitzeinheit (12) in der Längsrichtung (x) begrenzt ist, wobei der Drehwinkel (β, y) insbesondere in Bezug auf einen Anstoßwinkel verringert ist, beispielweise um 2°.

3. Sitzanordnung (10) nach Anspruch 2, **dadurch gekennzeichnet, dass** ein zweiter Drehwinkel (β) der Sitzeinheit (12) weniger als 50°, beispielsweise 48°, beträgt, wenn sich die Sitzeinheit (12) in einer zweiten Position (P2) entlang der Längsrichtung (x) befindet.

4. Sitzanordnung (10) nach Anspruch 2 oder 3, **dadurch gekennzeichnet, dass** ein dritter Drehwinkel (γ) der Sitzeinheit (12) weniger als 10°, beispielsweise 8°, beträgt, wenn sich die Sitzeinheit (12) in einer dritten Position (P3) entlang der Längsrichtung (x) befindet.

5. Sitzanordnung (10) nach einem der Ansprüche 2 bis 4, **dadurch gekennzeichnet, dass** ein dritter Drehwinkel (γ) der Sitzeinheit 0° beträgt, wenn sich die Sitzeinheit (12) in einer dritten Position (P3) entlang der Längsrichtung (x) befindet.

6. Sitzanordnung (10) nach einem der vorhergehenden Ansprüche, **dadurch gekennzeichnet, dass** an der Sitzeinheit (12) ein Bewegungselement (40.1, 40.2) angeordnet ist, das innerhalb eines an dem Sitzfuß (11) angeordneten Begrenzungselements (30) begrenzt verschiebbar ist.

7. Sitzanordnung (10) nach Anspruch 6, **dadurch gekennzeichnet, dass** das Begrenzungselement (30) eine stufenlose, zur Längsrichtung (x) zumindest teilweise symmetrische und/oder eine zumindest teilweise asymmetrische Verjüngung (33) von der ersten Position (P1) der Sitzeinheit (12) bis hin zur dritten Position (P3) der Sitzeinheit (12) aufweist.

8. Sitzanordnung (10) nach Anspruch 6 oder 7, **dadurch gekennzeichnet, dass** das Begrenzungselement (30) an einem ersten Ende (31) abgerundet ist und/oder an einem zweiten Ende (32) eine zum ersten Ende (31) hin offene Trapezform aufweist.

9. Sitzanordnung (10) nach Anspruch 8, **dadurch gekennzeichnet, dass** das Begrenzungselement (30) dem Bewegungselement (40.1) an dem zweiten Ende (32) einen geringeren Drehwinkel (γ) ermöglicht als an dem ersten Ende (31).

10. Sitzanordnung (10) nach Anspruch 8 oder 9, **dadurch gekennzeichnet, dass** das Begrenzungselement (30) an dem zweiten Ende (32) eine Drehung des Bewegungselements (40.2) verhindert.

11. Sitzanordnung (10) nach einem der Ansprüche 6 bis 10, **dadurch gekennzeichnet, dass** das Bewegungselement (40.2) nockenförmig ausgebildet ist oder dass das Bewegungselement (40.1) eine Kreisform mit einem Vorsprung aufweist.

12. Fahrzeug mit mindestens einer Sitzanordnung (10) nach einem der Ansprüche 1 bis 11, wobei das Fahrzeug die Umgebung (20) der Sitzanordnung (10) ausbildet.

13. Verfahren zur Steuerung einer Sitzanordnung (10) nach einem der Ansprüche 1 bis 11,
**dadurch gekennzeichnet, dass** mindestens ein erster Sensor eine Position (P1, P2, P3) der Sitzeinheit (12) entlang der Längsrichtung (x) erfasst, ein zugehöriger Drehwinkel (α, β, γ) errechnet wird und eine Drehung der Sitzeinheit (12) mittels einer Steuerung begrenzt wird.

14. Verfahren nach Anspruch 13, **dadurch gekennzeichnet, dass** mindestens ein zweiter Sensor eine Position, eine Geometrie, eine Veränderung der Position und/oder eine Veränderung der Geometrie des Einrichtungsgegenstands (22) erfasst und der Drehwinkel (α, β, γ) der Sitzeinheit (12) an die Position, die Geometrie, die Veränderung der Position und/oder die Veränderung der Geometrie des Einrichtungsgegenstands (22) angepasst wird.

## Claims

1. Seating arrangement (10) for preventing collision with another piece of furniture (22) in an environment (20) of the seating arrangement (10), wherein
- the piece of furniture (22) is fixed to the environment (20), and wherein
- the seating arrangement (10) comprises a seat base (11) fixed to a floor (21) of the environment (20),
- a seat unit (12) arranged on the seat base (11) and rotatable about an axis of rotation (D),
**characterised in that**
- the seating arrangement (10) is also displaceable in a longitudinal direction (x),
- a rotation of the seat unit (12) about the axis of rotation (D) is coupled to displacement of the seat unit (12) in the longitudinal direction (x), wherein
- a angle of rotation (α, β, γ) of the seat unit (12) is dependent on the displacement of the seat unit (12) in the longitudinal direction (x), and wherein
- a first angle of rotation (α) of the seat unit (12) is 360° when the seat unit (12) is in a first position (P1) along the longitudinal direction (x) so that free movement about the axis of rotation is possible, thereby enabling standing up or sitting down at any angle of rotation.

2. Seating arrangement (10) according to claim 1, **characterised in that** the angle of rotation (β, γ) of the seat unit (12) is limited as a function of the displacement of the seat unit (12) in the longitudinal direction (x), wherein the angle of rotation (β, γ) is reduced in particular with respect to an impact angle, for example by 2°.

3. Seating arrangement (10) according to claim 2, **characterised in that** a second angle of rotation (β) of the seat unit (12) is less than 50°, for example 48°, when the seat unit (12) is in a second position (P2) along the longitudinal direction (x).

4. Seating arrangement (10) according to claim 2 or 3, **characterised in that** a third angle of rotation (γ) of the seat unit (12) is less than 10°, for example 8°, when the seat unit (12) is in a third position (P3) along the longitudinal direction (x).

5. Seating arrangement (10) according to one of claims 2 to 4, **characterised in that** a third angle of rotation (γ) of the seat unit is 0° when the seat unit (12) is in a third position (P3) along the longitudinal direction (x).

6. Seating arrangement (10) according to one of the preceding claims, **characterised in that** a movement element (40.1, 40.2) is arranged on the seat unit (12), which movement element is displaceable in a limited manner within a limiting element (30) arranged on the seat base (11).

7. Seating arrangement (10) according to claim 6, **characterised in that** the limiting element (30) has a stepless, at least partially symmetrical in relation to the longitudinal direction (x) and/or at least partially asymmetrical taper (33) from the first position (P1) of the seat unit (12) to the third position (P3) of the seat unit (12).

8. Seating arrangement (10) according to claim 6 or 7, **characterised in that** the limiting element (30) is rounded at a first end (31) and/or has a trapezoidal shape open towards the first end (31) at a second end (32).

9. Seating arrangement (10) according to claim 8, **characterised in that** the limiting element (30) allows the movement element (40.1) a smaller angle of rotation (γ) at the second end (32) than at the first end (31).

10. Seating arrangement (10) according to claim 8 or 9, **characterised in that** the limiting element (30) prevents rotation of the movement element (40.2) at the second end (32).

11. Seating arrangement (10) according to one of claims 6 to 10, **characterised in that** the movement element (40.2) is cam-shaped or that the movement element (40.1) has a circular shape with a projection.

12. Vehicle with at least one seating arrangement (10) according to one of claims 1 to 11, wherein the vehicle forms the environment (20) of the seating arrangement (10).

13. Method for controlling a seating arrangement (10) according to one of claims 1 to 11, **characterised in that** at least one first sensor detects a position (P1, P2, P3) of the seat unit (12) along the longitudinal direction (x), a corresponding angle of rotation (α, β, γ) is calculated and a rotation of the seat unit (12) is limited by means of a controller.

14. Method according to claim 13, **characterised in that** at least one second sensor detects a position, a geometry, a change in the position and/or a change in the geometry of the piece of furniture (22) and the angle of rotation (α, β, γ) of the seat unit (12) is adapted to the position, the geometry, the change in position and/or the change in geometry of the piece of furniture (22).

## Revendications

1. Ensemble formant siège (10) permettant d'éviter une collision avec un autre objet d'équipement (22) dans un environnement (20) de l'ensemble formant siège (10), dans lequel
- l'objet d'équipement (22) est fixé à l'environnement (20), et dans lequel
- l'ensemble formant siège (10) comprend un pied de siège (11) fixé à un plancher (21) de l'environnement (20),
- une unité de siège (12) disposée sur le pied de siège (11), laquelle peut tourner autour d'un axe de rotation (D),
**caractérisé en ce que**
- l'ensemble formant siège (10) peut également être coulissé dans une direction longitudinale (x),
- une rotation de l'unité de siège (12) autour de l'axe de rotation (D) est accouplée à un coulissement de l'unité de siège (12) dans la direction longitudinale (x), dans lequel
- un angle de rotation (α, β, γ) de l'unité de siège (12) dépend du coulissement de l'unité de siège (12) dans la direction longitudinale (x), et dans lequel
- un premier angle de rotation (α) de l'unité de siège (12) est de 360° lorsque l'unité de siège (12) se situe dans une première position (P1) le long de la direction longitudinale (x) de sorte qu'un déplacement libre est donné autour de l'axe de rotation, moyennant quoi le fait de se lever ou de s'assoir est possible à tout angle de rotation quelconque.

2. Ensemble formant siège (10) selon la revendication 1,
**caractérisé en ce que** l'angle de rotation (β, γ) de l'unité de siège (12) est limité en fonction du coulissement de l'unité de siège (12) dans la direction longitudinale (x), dans lequel l'angle de rotation (β, γ) est en particulier réduit par rapport à un angl e d'impact, par exemple de 2°.

3. Ensemble formant siège (10) selon la revendication 2,
**caractérisé en ce qu'**un deuxième angle de rotation (β) de l'unité de siège (12) est inférieur à 50°, par exemple 48°, lorsque l'unité de siège (12) se situe dans une deuxième position (P2) le long de la direction longitudinale (x).

4. Ensemble formant siège (10) selon la revendication 2 ou 3,
**caractérisé en ce qu'**un troisième angle de rotation (γ) de l'unité de siège (12) est inférieur à 10°, par exemple 8°, lorsque l'unité de siège (12) se situe dans une troisième position (P3) le long de la direction longitudinale (x).

5. Ensemble formant siège (10) selon l'une des revendications 2 à 4,
**caractérisé en ce qu'**un troisième angle de rotation (γ) de l'unité de siège est de 0° lorsque l'unité de siège (12) se trouve dans une troisième position (P3) le long de la direction longitudinale (x).

6. Ensemble formant siège (10) selon l'une des revendications précédentes,
**caractérisé en ce qu'**un élément de déplacement (40.1, 40.2) est disposé sur l'unité de siège (12) et peut être coulissé de manière limitée à l'intérieur d'un élément de limitation (30) disposé sur le pied de siège (11).

7. Ensemble formant siège (10) selon la revendication 6,
**caractérisé en ce que** l'élément de limitation (30) présente un rétrécissement (33) continu, au moins partiellement symétrique et/ou au moins partiellement asymétrique par rapport à la direction longitudinale (x), de la première position (P1) de l'unité de siège (12) à la troisième position (P3) de l'unité de siège (12).

8. Ensemble formant siège (10) selon la revendication 6 ou 7,
**caractérisé en ce que** l'élément de limitation (30) est arrondi au niveau d'une première extrémité (31) et/ou présente une forme trapézoïdale ouverte vers la première extrémité (31) au niveau d'une seconde extrémité (32).

9. Ensemble formant siège (10) selon la revendication 8,
**caractérisé en ce que** l'élément de limitation (30) permet à l'élément de déplacement (40.1) d'avoir un angle de rotation (γ) plus faible au niveau de la seconde extrémité (32) qu'au niveau de la première extrémité (31).

10. Ensemble formant siège (10) selon la revendication 8 ou 9,
**caractérisé en ce que** l'élément de limitation (30) au niveau de la seconde extrémité (32) empêche une rotation de l'élément de déplacement (40.2).

11. Ensemble formant siège (10) selon l'une des revendications 6 à 10,
**caractérisé en ce que** l'élément de déplacement (40.2) est réalisé en forme de came ou **en ce que** l'élément de déplacement (40.1) présente une forme circulaire comportant une saillie.

12. Véhicule comportant au moins un ensemble formant siège (10) selon l'une des revendications 1 à 11, dans lequel le véhicule réalise l'environnement (20) de l'ensemble formant siège (10).

13. Procédé pour la commande d'un ensemble formant siège (10) selon l'une des revendications 1 à 11, **caractérisé en ce qu'**au moins un premier capteur détecte une position (P1, P2, P3) de l'unité de siège (12) le long de la direction longitudinale (x), un angle de rotation (α, β, γ) associé est calculé et une rotation de l'unité de siège (12) est limitée au moyen d'une commande.

14. Procédé selon la revendication 13, **caractérisé en ce qu'**au moins un second capteur détecte une position, une géométrie, un changement de position et/ou un changement de géométrie de l'objet d'équipement (22) et l'angle de rotation (α, β, γ) de l'unité de siège (12) est adapté à la position, à la géométrie, au changement de position et/ou au changement de géométrie de l'objet d'équipement (22).
